# EUROPÄISCHE PATENTSCHRIFT

(11) **EP 2 969 892 B1**
(45) Veröffentlichungstag und Bekanntmachung des Hinweises auf die Patenterteilung: **17.11.2021**
(21) Anmeldenummer: 13771395.4
(22) Anmeldetag: 28.09.2013
(51) Int. Cl.: B67C 3/00, B67C 3/10, B67C 3/12, G01F 1/58, G01L 9/00, B67C 3/26

(54) **VERFAHREN SOWIE FÜLLSYSTEM ZUM FÜLLEN VON BEHÄLTERN**
METHOD AND FILLING SYSTEM FOR FILLING CONTAINERS
PROCÉDÉ ET SYSTÈME DE REMPLISSAGE POUR REMPLIR DES CONTENANTS

(30) Priorität: 14.03.2013 DE 102013102616
(43) Veröffentlichungstag der Anmeldung: 20.01.2016
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2013/002924
(87) Internationale Veröffentlichungsnummer: WO 2014/139547

(56) Entgegenhaltungen:
- EP-A1- 0 582 190
- EP-A1- 1 162 167
- WO-A1-2005/056464
- DE-A1- 4 239 238
- DE-A1- 4 239 238
- DE-U1- 29 718 084
- DE-U1- 29 718 084
- US-B1- 6 213 169
- US-B2- 6 474 368
- US-B2- 6 474 368

## Beschreibung

Die Erfindung bezieht sich auf ein Verfahren zum Befüllen von Behältern, sowie auf ein Füllsystem gemäß dem Oberbegriff des Patentanspruchs 12.

Verfahren sowie Füllmaschinen zum Füllen von Behältern, auch Druckfüllen von Behältern sind bekannt, speziell auch zum Füllen von großvolumigen Behältern, beispielsweise von Behältern oder KEGs mit einem Volumen von 10, 20 oder 30 Litern und dabei speziell auch solchen aus Kunststoff, z.B. aus PET (Polyethylenterephthalat).

Unter "Druckfüllen" ist dabei im Sinne der Erfindung allgemein ein Füllverfahren zu verstehen, bei dem der jeweils zu füllende Behälter in Dichtlage gegen das Füllelement anliegt und in der Regel vor der eigentlichen Füllphase, d.h. vor dem Öffnen des Flüssigkeitsventils über wenigstens einen gesteuerten, im Füllelement ausgebildeten Gasweg mit einem unter Fülldruck stehenden Spanngas (Inertgas bzw. CO2-Gas) vorgespannt wird, welches dann während des Füllens von dem dem Behälter zufließenden Füllgut zunehmend als Rückgas aus den Behälterinnenraum verdrängt wird, und zwar ebenfalls über wenigstens einen gesteuerten, im Füllelement ausgebildeten Gasweg. Dieser Vorspannphase können weitere Behandlungsphasen vorausgehen, beispielsweise ein Evakuieren und/oder ein Spülen des Behälterinnenraums mit einem Inertgas, z.B. CO2-Gas usw., und zwar ebenfalls über die im Füllelement ausgebildeten Gaswege.

In Dichtlage mit dem Füllelement befindlicher Behälter bedeutet im Sinne der Erfindung, dass der jeweilige Behälter in der dem Fachmann bekannten Weise mit seiner Behältermündung dicht an den Behandlungskopf oder an das Füllelement bzw. an eine dortige Dichtung angepresst anliegt.

Nachteilig bei bekannten Verfahren zum Druckfüllen von kohlensäurehaltigen Füllgütern oder Produkten (Getränken) ist, dass es vielfach bei der Entlastung auf Umgebungsdruck zu einer unerwünschten Schaumbildung kommt, was zwar grundsätzlich durch eine Verlängerung der Entlastungsphase vermieden oder gemindert werden kann, dann allerdings zu einer Reduzierung der Füllleistung führt. Bekannt ist weiterhin auch, großvolumige Behälter oder KEGs vor dem Füllen mit einer Druckprüfung auf ihre Dichtigkeit zu prüfen, um ein Füllen von undichten Behältern zu vermeiden. Die Druckprüfung wird bisher bei leeren Behältern durchgeführt, und zwar mit einem Prüfmedium oder Prüfgas mit hohem Prüfdruck. Bei einem entsprechend großen Volumen der Behälter kann es bei ihrem Reißen oder Platzen zu erheblichen Beschädigungen an Maschinen und Anlagen, insbesondere aber auch zu ernsten gesundheitlichen Beeinträchtigungen anwesender Personen führen. So kann es beispielsweise durch einen äußerst lauten Knall beim Bersten eines großvolumigen unter Prüfdruck stehenden Behälters zu Hörschädigungen von Personen im Umfeld einer Maschine oder Prüfeinrichtung kommen. Ursache für diese unerwünschten Folgen ist das plötzliche Freisetzen der im komprimierten Prüfgas gespeicherten Energie.

Aus der US 6 474 368 B2 sind ein Füllsystem gemäß dem Oberbegriff des Anspruchs 12 und ein entsprechendes Verfahren bekannt. Aus der DE 297 18 084 U1 sind ein Füllsystem und ein Füllverfahren bekannt, bei welchen die Dichtigkeit der Behälter geprüft wird, wobei ein Prüfdruck ausschließlich über eine elastische Verformung des gefüllten Behälters aufgebaut wird.

Aufgabe der Erfindung ist es, ein Verfahren aufzuzeigen welches unter Vermeidung der vorgenannten Nachteile ein optimales Füllen von Behälter mit hoher Leistung (Anzahl der gefüllten Behälter je Zeiteinheit) ermöglicht. Zur Lösung dieser Aufgabe ist ein Verfahren entsprechend dem Patentanspruch 1 oder 2 ausgebildet. Ein Füllsystem ist Gegenstand des Patentanspruchs 12.

Nach einem ersten Aspekt der Erfindung erfolgt beim Druckfüllen des jeweiligen Behälters, d.h. auf die Füllphase folgend oder im Anschluss an die Füllphase in einer zusätzlichen Druckbehandlungsphase eine Erhöhung des Behälterinnendrucks auf einen Behandlungsdruck, der deutlich über dem Fülldruck liegt, und zwar durch Beaufschlagung des vom Füllgut nicht eingenommenen Kopfraums des gefüllten Behälters mit einem unter Druck stehenden Behandlungsgas. Das Behandlungsgas ist ein Inertgas, beispielsweise CO2-Gas oder Stickstoff.

Mit dem Behandlungsdruck erfolgt in der Druckbehandlungsphase eine Erhöhung des Behälterinnendrucks beispielsweise um 0,5 bar bis 5,0 bar, vorzugsweise um 0,5 bar bis 3,0 bar. Die Dauer der Druckbehandlungsphase ist vorzugsweise kürzer als die Dauer der Füllphase und beträgt beispielsweise 0,5 bis 10 Sekunden, vorzugsweise 0,5 bis 3,0 Sekunden.

Wider Erwarten hat sich gezeigt, dass die zeitlich begrenzte Erhöhung des Behälterinnendrucks in der Druckbehandlungsphase auf den Behandlungsdruck nach Beendigung der Füllphase, d.h. nach dem endgültigen Schließen des Flüssigkeitsventils, die Bindung der Kohlensäure in einem kohlensäurehaltigen Füllgut (nachstehend kurz "Kohlensäure-Bindung") verbessert und dass dadurch beim späteren Entlasten des Behälters auf Umgebungsdruck ein Freisetzen von Kohlensäure aus dem Füllgut und eine damit verbundene Schaumbildung zumindest reduziert werden. Dieser Effekt stellt eine wesentliche Verbesserung des Verfahrens dar und ermöglicht auch eine Steigerung der Füllleistung (Anzahl der gefüllten Behälter je Zeiteinheit).

Da nur der relativ kleinvolumige, vom Füllgut nicht eingenommene Kopfraum des jeweils gefüllten Behälters mit dem unter dem Behandlungsdruck stehenden Behandlungsgas beaufschlagt wird, sind Beschädigungen an Maschinen und Anlagen sowie auch gesundheitliche Beeinträchtigungen von anwesenden Personen bei einem eventuellen Bersten bzw. Reißen oder Platzen der Behälter nicht zu befürchten.

Nach einem weiteren Aspekt der Erfindung erfolgt eine Druckprüfung des jeweiligen Behälters während des Füllprozesses, und zwar erst dann, wenn der betreffende Behälter mit dem flüssigen Füllgut zumindest soweit teilgefüllt ist, dass das Volumen, welches von dem Füllgut nicht eingenommen und mit dem Behandlungsdruck (Prüfdruck) des Behandlungsgases zu beschlagen ist, gegenüber dem Gesamtvolumen des Behälters wesentlich reduziert ist, beispielsweise weniger als 20% des Gesamtvolumens des leeren Behälters ausmacht. Das Behandlungsgas ist bei dieser Druckprüfung das Prüfgas. Die Druckprüfung ist in das Füllverfahren integriert, und zwar beispielsweise als Verfahrensschritt vor dem Entlasten des gefüllten Behälters auf Umgebungsdruck. Der Prüfdruck entspricht beispielsweise dem vorstehend angegebenen Druckbehandlungsdruck zur Verbesserung der Kohlensäure-Bindung und/oder liegt beispielsweise im Bereich zwischen dem 1,5-Fachen und 2,5-Fachen des Fülldruckes und beträgt z.B. das 2-Fache des Fülldruckes.

Durch das stark reduzierte Volumen, welches bei der Druckprüfung mit dem kompressiblen Prüfgas unter Prüfdruck beaufschlagt ist, wird auch während der Druckprüfung die Gefahr von Beschädigung an Maschinen und Anlagen sowie die Gefahr von Verletzungen im Falle eines Versagens bzw. Berstens oder Platzens des betreffenden Behälters vermieden, zumindest aber erheblich gemindert.

Bei einer bevorzugten Ausführungsform der Erfindung erfolgt die Druckprüfung erst am Ende der eigentlichen Füllphase des Füllprozesses, sodass dann nur noch das äußerst geringe Volumen in dem vom Füllgut nicht eingenommenen Kopfraum des betreffenden Behälters mit dem unter Prüfdruck stehenden Druckgas beaufschlagt wird. Bei dieser Ausführungsform erfolgt die Druckprüfung bevorzugt während der Druckbehandlungsphase zur Verbesserung der Kohlensäure-Bindung, d.h. der Behandlungsdruck wird zugleich als Prüfdruck für die Druckprüfung genutzt.

Der Erfindung liegt weiterhin auch die Erkenntnis zugrunde, dass die Einsparungen, die sich durch die Reduzierung der Behandlungsgas- oder Prüfgasmenge und durch den Verzicht auf konstruktive Sicherheitsmaßnahmen gegen platzende oder explodierende Behälter ergeben, höher sind als die Kosten, die der gelegentliche Verlust einer Behälterfüllung des Füllgutes verursacht.

Vorzugsweise erfolgt die Beaufschlagung des vom Füllgut nicht eingenommenen Behälterinnenraums oder Kopfraums mit dem Behandlungsgas aus einer gesonderten Quelle, die das als Behandlungsgas oder Prüfgas verwendetes Inertgas (z.B. CO2-Gas oder Stickstoff) unter Behandlungs- oder Prüfdruck bereitstellt, oder aus einem das Behandlungsgas oder Prüfgas unter Behandlungs- oder Prüfdruck führenden Kanal über ein im Füllelement vorgesehenes Steuerventil. Der Behandlungs- oder Prüfdruck ist beispielsweise frei wählbar oder einstellbar, ist aber zumindest bei der Druckbehandlung zur Verbesserung der Kohlensäure-Bindung größer als der Fülldruck, der beim Druckfüllen der Behälter verwendet wird.

Die Druckprüfung oder die Druckbehandlung zur Verbesserung der Kohlensäure-Bindung kombiniert mit der Druckprüfung werden z.B. so durchgeführt, dass der jeweilige Behälter zeit- und/oder druckgesteuert mit dem Behandlungs- oder Prüfdruck beaufschlagt wird und dann nach einem Trennen der Verbindung zwischen den Behälter und der das Behandlungsgas oder Prüfgas unter Behandlungsdruck bereitstellenden Quelle der Druck im Behälter über eine Zeitdauer (Prüfzeit) überwacht wird. Fällt hierbei der Druck im Behälter während der Prüfzeit ab, so wird der Behälter als undicht erkannt und beispielsweise ausgeschleust.

Die Vorteile der Erfindung bestehen also u.a. in einer Verbesserung der Kohlensäure-Bindung bei einem kohlensäurehaltigen, d.h. karbonisierten Füllgut und bei Durchführung der Druckprüfung in einer Reduzierung der Gefahr von Beschädigungen und gesundheitlichen Beeinträchtigungen während der Druckprüfung. Durch das reduzierte, mit dem Behandlungsgas zu beaufschlagende Volumen ergeben sich weiterhin eine erhebliche Einsparung an diesem Gas und eine erhebliche Reduzierung der Gesamtdauer der Druckbehandlung und Druckprüfung im Vergleich zu einer Druckprüfung der leeren Behälter.

Unter "Freistrahlfüllen" ist im Sinne der Erfindung ein Verfahren zu verstehen, bei dem das flüssige Füllgut dem zu befüllenden Behälter in einem freien Füllstrahl zuströmt, wobei der Behälter mit seiner Behältermündung oder ―öffnung nicht am Füllelement anliegt, sondern von dem Füllelement bzw. von einem dortigen Füllgutauslass beabstandet ist.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:

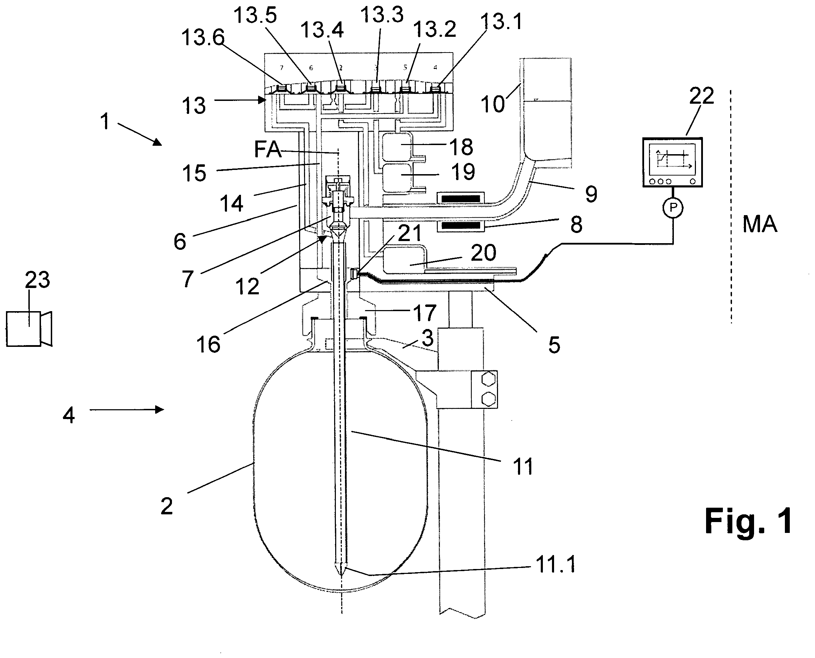

- Fig. 1: in vereinfachter Darstellung und teilweise im Schnitt das Füllelement einer Füllstelle eise Füllsystems oder einer Füllmaschine zum Druckfüllen von großvolumigen Behältern;
- Fig. 2: in einem Druck-Zeitdiagramm den zeitlichen Verlauf eines Prüfdruckes während einer kombinierten Druckbehandlung und Druckprüfung;
- Fig. 3: eine ähnliche Darstellung wie Figur 1 bei einer weiteren Ausführungsform der Erfindung.

In den Figuren ist 1 ein Füllelement eines Füllsystems oder einer Füllmaschine, beispielsweise einer Füllmaschine umlaufender Bauart zum Druckfüllen von großvolumigen, aus Kunststoff, z.B. aus PET hergestellten Behältern 2 bzw. KEGs mit einem flüssigen Füllgut. Das Füllelement 1 bildet zusammen mit einem Behälterträger 3, an welchem der jeweilige Behälter 2 beim Füllen hängend und mit dem Rand seiner Behälteröffnung in Dichtlage an das Füllelement 1 angepresst gehalten ist, eine Füllstelle 4 des Füllsystems einer Füllmaschine, die beispielsweise an einem um eine vertikale Maschinenachse MA umlaufend antreibbaren Rotor 5 eine Vielzahl derartiger Füllstellen 4 aufweist. In einem Gehäuse 6 des Füllelementes 1 ist u.a. ein Flüssigkeitskanal 7 ausgebildet, der mit seinem oberen Bereich über eine einen Durchflussmesser 8 aufweisende Produktleitung 9 mit einem für sämtliche Füllpositionen 4 gemeinsamen, am Rotor 5 vorgesehenen Füllgutkessel 10 verbunden ist. Dieser ist beim Füllen mit dem Füllgut teilgefüllt und in dem von dem Füllgut nicht eingenommenen Raum mit einem unter dem Fülldruck P_{F} stehenden Inertgas (beispielsweise CO2-Gas oder Stickstoff) beaufschlagt.

Der Flüssigkeitskanal 7 setzt sich in einem achsgleich mit einer vertikalen Füllelementachse FA angeordneten Füllrohr 11 fort, welches auch beim Füllen weit in den Behälter 2 bis in die Nähe des Behälterbodens hineinreicht und an seinem unteren Ende eine Abgabeöffnung 11.1 für das flüssige Füllgut bildet. Im Flüssigkeitskanal 7 ist weiterhin ein Flüssigkeitsventil 12 angeordnet, welches in der Füllphase zum Füllen geöffnet und dann, wenn im Behälter 2 die erforderliche Füllgutmenge erreicht ist, aufgrund des von dem Durchflussmesser 8 gelieferten Signals geschlossen wird.

Im Gehäuse 6 des Füllelementes 1 sind weiterhin mehrere Gaswege vorgesehen, die Steuerventile 13.1 - 13.6 einer Steuerventilanordnung 13 enthalten und die über im Gehäuse 6 ausgebildete Gaskanäle 14 und 15 in den Flüssigkeitskanal in Strömungsrichtung des Füllgutes nach dem Flüssigkeitsventil 12 (Gaskanal 14) bzw. in einen zusätzlichen Gasraum 16 (Gaskanal 15) münden, der das Füllrohr 11 umschließt und an der Unterseite des Füllelementes 1 bzw. an einer dortigen Zentriertulpe 17 eine das Füllrohr 11 umschließende ringförmige Öffnung bildet, sodass bei in Dichtlage am Füllelement 1 angeordneten Behälter 2 der Gasraum 16 mit dem Behälterinnenraum in Verbindung steht. Die Steuerventile 13.1 ― 13.6 sind bei der dargestellten Ausführungsform vorzugsweise pneumatisch betätigte Ventile, die ihrerseits über eine nicht dargestellte elektropneumatische Ventile aufweisende Ventilsteuerung angesteuert werden.

Am Rotor 5 sind für sämtliche Füllelemente 1 des Füllsystems gemeinsam mehrere Ringkanäle 18, 19 und 20 vorgesehen, die in der nachstehend noch näher beschriebenen Weise über die Steuerventile 13.1 - 13.6 gesteuert mit den Gaskanälen 14 und 15 und damit mit dem Flüssigkeitskanal 7 bzw. mit dem Gasraum 16 verbunden werden können und von denen der Ringkanal ein als Behandlungsgas verwendetes Inertgas , z.B. CO2-Gas oder Stickstoff mit dem erhöhten Prüfdruck P_{P} führt. Der Ringkanal 19 dient beispielsweise u.a. zum Rückführen von Inertgas beim Druckfüllen der Behälter 2.

Mit dem Füllelement 1 bzw. mit dem betreffenden Füllsystem ist u.a. ein Füllverfahren mit folgenden Verfahrensschritten möglich, wobei bei allen nachstehend beschriebenen Verfahrensschritte gilt, dass sich die Steuerventile 13.1 - 13.6 jeweils in ihrem geschlossenen Zustand befinden, sofern der geöffnete Zustand nicht ausdrücklich erwähnt ist:

### 1. Spülen der Behälter 2

Bei geschlossenem Flüssigkeitsventil 12 und geöffneten Steuerventilen 13.1, 13.2, 13.4 und 13.6 erfolgt ein Spülen des Innenraums des jeweiligen in Dichtlage gegen das Füllelement 1 bzw. gegen die Zentriertulpe 17 angepressten Behälters 2 aus dem das Inertgas, z.B. CO2-Gas unter Druck führenden Ringkanal 20 und das Füllrohr 11, wobei das hierbei aus dem Behälter 2 von dem Spülgas verdrängte Luft in den Ringkanal 18 abgeführt wird.

In ähnlicher Weise kann das Spülen des Behälterinnenraums auch aus dem ebenfalls das Inertgas unter Druck führenden Ringkanal 19 erfolgen. Hierfür sind bei geschlossenem Flüssigkeitsventil 12 die Steuerventile 13.1, 13.2, 13.3 und 13.6 geöffnet. Die von dem Spülgas verdrängte Luft wird wiederum in den Ringkanal 18 abgeführt.

### 2. Vorspannen des Behälterinnenraums

Hierfür sind bei geschlossenem Flüssigkeitsventil 12 die Steuerventile 13.3 und 13.6 geöffnet, sodass aus dem Ringkanal 19 das unter Druck stehende Inertgas in den Innenraum des Behälters einströmen kann, und zwar wiederum über den Gaskanal 14 und das Füllrohr 11.

Alternativ kann das Vorspannen des Behälters 2 aber auch aus dem Ringkanal 20 erfolgen. Hierfür sind bei geschlossenem Flüssigkeitsventil 12 die Steuerventile 13.4 und 13.6 geöffnet, sodass das unter Druck stehende Inertgas aus dem Ringkanal über den Gaskanal 14 und das Füllrohr 11 in den Behälter 2 einströmen kann.

### 3. Füllen der Behälter 2 unter Druck

Für das Füllen des jeweiligen Behälters 2 bzw. für die Einleitung der Füllphase wird das Flüssigkeitsventil 12 geöffnet. Die Steuerventile 13.3 und 13.5 sind geöffnet, sodass das flüssige kohlensäurehaltige Füllgut über das Füllrohr 11 unterschichtig in den Behälter einströmt und dabei aus dem Behälter verdrängtes Inertgas über den Gasraum 16 und den Gaskanal 14 in den Ringkanal 19 zurückgeführt wird. Die Füllphase wird durch das Schließen des Flüssigkeitsventils 12 beendet.

### 4. Niveauausgleich des Füllgutes

Im Anschluss an die Füllphase erfolgt ein Niveauausgleich des Füllgutes im Behälter 2 und im Füllrohr 11, und zwar dadurch, dass bei geschlossenem Flüssigkeitsventils 12 die beiden Steuerventile 13.5 und 13.6 geöffnet werden.

### 5. Druckbehandlung der Behälter 2

Nach Beendigung der Füllphase und nach dem Niveauausgleich erfolgt die Druckbehandlung des weiterhin in Dichtlage am Füllelement 1 angeordneten Behälters 2 zur Verbesserung der Kohlensäure-Bindung.

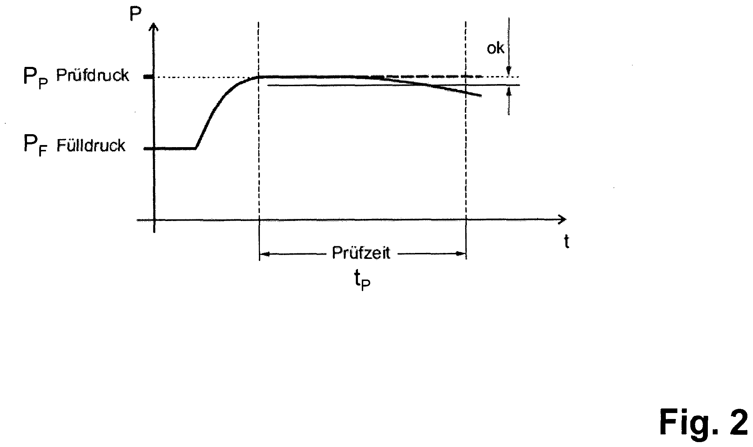

Hierfür werden bei geschlossenem Flüssigkeitsventil 12 die Steuerventile 13.4 - 13.6 geöffnet, sodass über die Steuerventilanordnung 13 und die Gaskanäle 14 und 15 der von dem Füllgut nicht eingenommene obere Raum (Kopfraum) des Behälterinnenraums mit dem deutlich über dem Fülldruck P_{F} liegenden Behandlungsdruck P_{P} aus dem Ringkanal 20 beaufschlagt wird, wie dies auch in der Figur 2 dargestellt ist.

Insbesondere dann, wenn die Druckbehandlung zugleich auch zur Druckprüfung des jeweiligen Behälters 2 dient, werden zeit- und/oder druckgesteuert die Steuerventile 13.4 ― 13.6 geschlossen, so dass die Verbindung zwischen dem Behälter 2 und dem Ringkanal 20 getrennt ist. Nach dem Schließen der Steuerventile 13.4 -13.6 wird mit Hilfe eines im Gasraum 16 angeordneten Drucksensors 21, der ein vom gemessenen Druck abhängiges elektrisches Signal liefert, der Behandlungsdruck Pp im Kopfraum des gefüllten Behälters 2 über eine Prüfzeit t_{P} gemessen und mit einer Messeinrichtung 22 überwacht. Bleibt der von dem Sensor 21 erfasste Behandlungsdruck P_{P} während der Prüfzeit t_{P} konstant, so bedeutet dies, dass der gefüllte Behälter 2 dicht ist und nach dem Entlasten beispielsweise verschlossen werden kann. Nimmt der Behandlungsdruck Pp während der Prüfzeit t_{P} ab, so bedeutet dies einen fehlerhaften Behälter 2.

### 6. Entlasten der Behälter 2

Nach der Druckbehandlung erfolgt das Entlasten des Behälterinnenraumes auf Umgebungs- bzw. Atmosphärendruck, und zwar bei geschlossenem Flüssigkeitsventil 12 durch Öffnen der Steuerventile 13.2, 13.5 und 13.6.

### 7. Abnehmen der gefüllten Behälter 2

Nach dem Entlasten des jeweiligen Behälters 2 wird dieser durch Absenken des Behälterträgers 3 vom Füllelement 1 abgenommen.

Selbstverständlich sind mit dem die Füllelemente 1 aufweisenden Füllsystem auch weitere Verfahrensschritte möglich, so beispielsweise bei einem Vorspannen aus dem das Inertgas unter dem Behandlungsdruck Pp führenden Ringkanals 20, ein Entlasten auf den Fülldruck P_{F} durch Verbinden der Gaskanäle 14 und 15 über die Steuerventilanordnung 13 mit dem Ringkanal 18, ein langsames Anfüllen am Beginn der Füllphase und/oder ein langsames Bremsfüllen am Ende der Füllphase jeweils durch Öffnen des Steuerventils 13.2 bei geschlossenen Steuerventilen 13.1 und 13.3 - 13.6 zum gedrosselten Rückführen des aus dem Behälterinnenraum verdrängten Inertgases in den Ringkanal 18.

Bei dem vorbeschriebenen Verfahren erfolgt nicht nur die Druckbehandlung, sondern auch die Druckprüfung der Behälter 2 dann, wenn diese Behälter 2 bereits mit dem flüssigen Füllgut gefüllt sind und der verbleibende, von dem Füllgut nicht eingenommene und mit dem hohen Behandlungsdruck Pp aus dem Ringkanal 20 beaufschlagte Behälterinnenraum ein im Vergleich zum Gesamtvolumen des Behälters 2 nur sehr geringes Volumen aufweist.

Es besteht auch die Möglichkeit, das bei einem undichten Behälter 2 austretendes Füllgut während der Druckbehandlung mit einem Kamerasystem 23 zu überwachen bzw. als Kriterium für einen defekten Behälter 2 zu verwenden. Diese Möglichkeit bietet sich insbesondere dann an, wenn eine Druckprüfung gewünscht ist und das in die Behälter 2 abzufüllende Füllgut zur Schaumbildung neigt, wie dies beispielsweise bei Bier der Fall ist. Die Kamera des Kamerasystems 23 ist dabei vorzugsweise außerhalb der Füllmaschine angeordnet.

Wird das unter dem Behandlungsdruck Pp stehende Behandlungsgas nach Beendigung der Druckbehandlung in den üblicherweise zum Vorspannen der Behälter 2 dienenden Ringkanal 19 abgeleitet wird, geht dieses Behandlungsgas nicht zwingend verloren, vielmehr kann es bei einer besonders vorteilhaften Ausführungsform für das Vorspülen und/oder Vorspannen wieder verwendet werden.

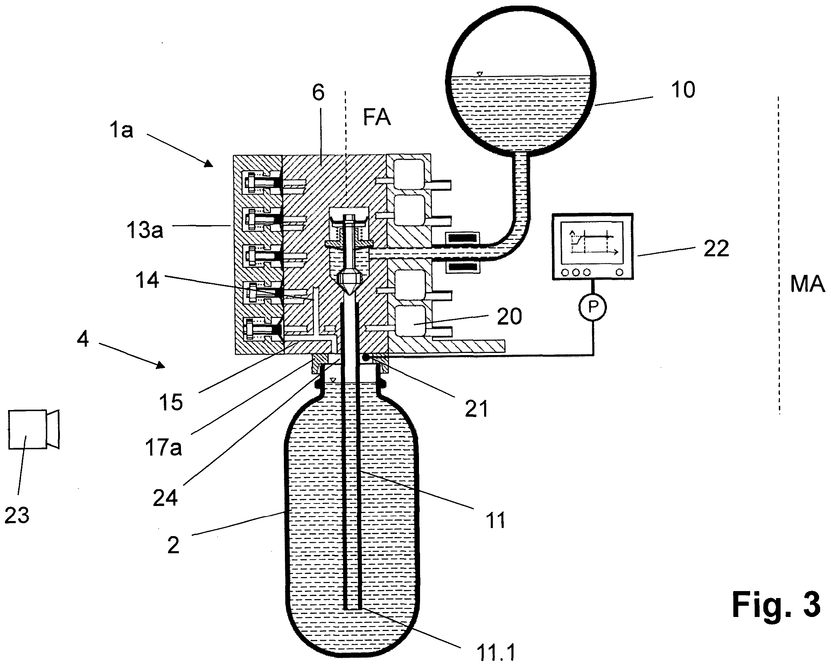

Die Figur 3 zeigt in vereinfachter Darstellung ein Füllelement 1a eines Füllsystems bzw. einer Füllmaschine. Das Füllelement 1a unterscheidet sich vom Füllelement 1 zunächst im Wesentlichen nur dadurch, dass beide Gaskanäle 14 und 15, die wiederum Bestandteil von die Steuerventileinrichtung 13 aufweisenden gesteuerten Gaswegen sind, in einen gemeinsamen Raum 24 münden, der das Füllrohr 11 ringförmig umschließt und an der Unterseite des Füllelementes 1a offen ist, sodass der Raum 24 bei in Dichtlage am Füllelement 1a angeordneten Behälter 2 mit dem Behälterinnenraum in Verbindung steht. Im Raum 24, der bei der dargestellten Ausführungsform von einer der Zentriertulpe 17 entsprechenden Zentriertulpe 17a gebildet ist, ist der Drucksensor 21 angeordnet. Bei der Druckbehandlung ist der Raum 24 über ein geöffnetes Steuerventil der Steuerventilanordnung 13 mit dem das Behandlungsgas bzw. Inertgas unter dem Behandlungsdruck Pp führenden Ringkanal 20 verbunden.

Vorstehend wurde davon ausgegangen, dass die Druckprüfung nach Beendigung der Füllphase während der Druckbehandlung zur Verbesserung der Kohlensäure-Bindung in einem kohlensäurehaltigen Füllgut erfolgt. Die Erfindung sieht aber auch vor, eine Druckprüfung der Behälter 2 ebenfalls dann vorzunehmen, wenn eine Verbesserung der Kohlensäure-Bindung nicht erforderlich oder möglich ist, beispielsweise bei einem nicht karbonisierten Füllgut. Die Druckprüfung erfolgt dann beispielsweise wiederum nach Beendigung der Füllphase, und zwar durch Beaufschlagung des Kopfraumes des in Dichtlage am Füllelement angeordneten Behälters 2 mit dem Behandlungsgas.

Weiterhin kann die Druckprüfung auch bereits dann erfolgen, wenn der jeweilige Behälter 2 noch nicht vollständig, aber weitestgehend mit dem flüssigen Füllgut gefüllt ist, und zwar unabhängig davon, ob nach Beendigung der Füllphase die Druckbehandlung zur Verbesserung der Kohlensäure-Bindung erfolgt oder nicht erfolgt. Das Füllen des jeweiligen Behälters 2 wird dabei für die Druckprüfung unterbrochen und nach der Druckprüfung je nach Ergebnis dieser Prüfung fortgesetzt oder aber der entsprechende Behälter und dessen Inhalt werden verworfen. Bei dieser Variante des erfindungsgemäßen Verfahrens erfolgt nach der Druckprüfung ein Entlasten des jeweiligen Behälters auf den Fülldruck P_{F}, bevor das Druckfüllen fortgesetzt wird.

Vorstehend wurde in der Beschreibung und den Ausführungsbeispielen davon ausgegangen, dass die Druckprüfung während oder nach Beendigung einer Druckfüllphase erfolgt, wobei sich der Behälter bereits während der Druckfüllphase in Dichtlage mit dem Füllventil befindet. Dieses ist jedoch nicht zwingend.

So ist erfindungsgemäß ebenfalls vorgesehen, die Druck- oder Dichtigkeitsprüfung auch im Anschluss an eine Freistrahlfüllung durchzuführen. Hierbei wird der jeweilige Behälter 2 zunächst vollständig, zumindest aber zu einem Teil mit dem Füllgut befüllt wird. Anschließend wird der Behälter 2 an der Füllmaschine, oder aber auch an einer weiteren Behälterbehandlungsmaschine mit dem Füllventil oder mit einem Dichtigkeitsprüfkopf in eine druckdichte Verbindung, d.h. in Dichtlage gebracht. Beispielsweise durch ein weiteres Anheben des Behälters oder aber auch durch ein Absenken des Füllventils oder des Dichtigkeitsprüfkopfes.

Befindet sich der Behälter nun in Dichtlage, so wird dieser mit dem unter Prüfdruck stehenden Behandlungsgas oder Prüfgas beaufschlagt, so dass die Druckprüfung, bzw. Dichtigkeitsprüfung durchgeführt werden kann. Nach der Durchführung der Dichtigkeitsprüfung wird der Behälter von Prüfdruck auf Umgebungsdruck entspannt.

Eine Besonderheit der vorliegenden Erfindung, nämlich dass die Druckprüfung der Behälter 2 erst dann erfolgt, wenn diese Behälter bereits mit dem flüssigen Füllgut gefüllt sind, kommt auch bei dieser Freistrahlfüllung zur Anwendung.

Im Rahmen der vorliegenden Erfindung ist es unerheblich, ob der Behälter zum Zeitpunkt der Druckprüfung bereits mit einem Verschluss, beispielsweise mit einem Fitting versehen ist oder nicht. Ist der Behälter bereits mit einem Verschluss versehen, so erstrecken sich die Druckprüfung und damit Dichtigkeitsprüfung vorzugsweise auch auf den Verschluss und/oder die Verbindung des Verschlusses mit dem Behälter. Ist der Behälter noch nicht mit einem Verschluss versehen, so erstreckt sich die Dichtigkeitsprüfung lediglich auf den Behälter selbst.

Im Rahmen der vorliegenden Anmeldung werden die Begriffe Druckprüfung und Dichtigkeitsprüfung synonym verwendet, da im Rahmen der vorliegenden Anmeldung die Druckprüfung ausschließlich zur Dichtigkeitsprüfung verwendet wird.

Als Druck- oder Behandlungsgas bzw. Inertgas eignen sich insbesondere CO2-Gas oder Stickstoff, aber für die Druckprüfung auch sterile Luft, sofern die Druckprüfung ohne oder gesondert von der Druckbehandlung zur Verbesserung der Kohlensäure-Bindung erfolgt.

### Bezugszeichenliste

- 1: Füllelement
- 2: Behälter
- 3: Behälterträger
- 4: Füllposition
- 5: Rotor
- 6: Gehäuse des Füllelementes 1
- 7: Flüssigkeitskanal
- 8: Durchflussmesser
- 9: Produktleitung
- 10: Füllgutkessel
- 11: Füllrohr
- 11.1: Abgabeöffnung
- 12: Flüssigkeitsventil
- 13: Steuerventilanordnung
- 13.1 ― 13.6: Steuerventil
- 14, 15: Gaskanal
- 16: Gasraum
- 17, 17a: Zentriertulpe
- 18 ― 20: Ringkanal
- 21: Drucksensor
- 22: Mess- und Überwachungseinheit
- 23: Kamera
- 24: Raum
- FA: Füllelementachse
- MA: Maschinenachse

## Patentansprüche

1. Verfahren zum Befüllen von Behältern (2), insbesondere von großvolumigen Behältern mit einem flüssigen karbonisierten Füllgut, wobei zum Druckfüllen des jeweiligen Behälters (2) dieser in Dichtlage an einem Füllelement (1, 1a) angeordnet ist, über welches in einer Füllphase dem mit einem Spanngas auf einen Fülldruck (PF) vorgespannten Behälterinnenraum das Füllgut unter Fülldruck zufließt, wobei nach Beendigung der Füllphase in einer Entlastungsphase Entlastung des Behälters (2) auf Umgebungsdruck erfolgt, wobei auf die Füllphase folgend und vor der Entlastungsphase in jeweils einer Druckbehandlungsphase eine Beaufschlagung des Füllgutes in den Behältern (2) mit einem gegenüber dem Fülldruck (PF) erhöhten Behandlungsdruck (PP) erfolgt, und zwar durch Einleiten eines Behandlungsgases in einen vom Füllgut nicht eingenommenen Kopfraum des jeweiligen, weiterhin in Dichtlage am Füllelement (1, 1a) angeordneten Behälters (2), wobei es sich bei der Druckbehandlungsphase um eine kombinierte Druckbehandlung und Druckprüfung handelt, wobei diese Druckprüfung so erfolgt, dass der jeweilige Behälter (2) zeit- und/oder druckgesteuert mit dem Behandlungs- oder Prüfdruck beaufschlagt wird und dann nach einem Trennen der Verbindung zwischen dem Behälter (2) und der, das Behandlungsgas oder Prüfgas unter Behandlungsdruck bereitstellenden Quelle der Druck im Behälter (2) über eine Zeitdauer bzw. eine Prüfzeit überwacht wird, wobei der Behälter dann, wenn hierbei der Druck im Behälter (2) während der Prüfzeit abfällt als undicht erkannt und beispielsweise ausgeschleust wird.

2. Verfahren zum Befüllen von Behältern (2), insbesondere von großvolumigen Behältern mit einem flüssigen Füllgut, wobei die Behälter in einer Füllphase mit dem flussigen Füllgut gefüllt werden, wobei der Behälterinnenraum der Behälter (2) während einer als Druckprüfung ausgebildeten Druckbehandlungsphase mit einem Behandlungsdruck (PP) eines als Prüfgas verwendeten Behandlungsgases aus einer dieses Behandlungsgas bereitstellenden Quelle (20) beaufschlagt und nach einem Trennen der Verbindung zwischen dem Behälterinnenraum und der Quelle (20) der zeitlichen Verlaufs des Druckes im Behälterinnenraum über eine Prüfzeit (tP) überwacht wird,
wobei die Druckprüfung bei mit dem Füllgut in der Füllphase zumindest teilgefüllten Behälter (2) durchgeführt wird, wobei die Druckprüfung bei in Dichtlage gegen ein Füllelement (1, 1a) eines Füllsystems angeordnetem Behälter (2) erfolgt und dass der Behandlungsdruck (PP) größer ist als der Fülldruck (PF), der bei einem Druckfüllen der Behälter (2) verwendet wird.

3. Verfahren nach einem der vorhergehenden Ansprüche, **dadurch gekennzeichnet, dass** die Druckbehandlung und/oder Druckprüfung durch Verbinden des jeweiligen Behälterinnenraums mit einem das Behandlungsgas unter Behandlungsdruck (PP) führenden Kanals (20) des Füllsystems erfolgt.

4. Verfahren nach einem der vorhergehenden Ansprüche, **dadurch gekennzeichnet, dass** die Dauer der Druckbehandlungsphase kürzer ist als die Füllphase und/oder 0,5 bis 10 Sekunden, vorzugsweise 0,5 bis 3,0 Sekunden beträgt.

5. Verfahren nach einem der vorhergehenden Ansprüche, **dadurch gekennzeichnet, dass** der Behandlungsdruck (PP) dem 1,5-Fachen bis 2,5-Fachen des Fülldruckes (PF) beim Druckfüllen, bevorzugt dem 2-Fachen des Fülldruckes (PF) beim Druckfüllen entspricht.

6. Verfahren nach einem der vorhergehenden Ansprüche, **dadurch gekennzeichnet, dass** bei der Druckbehandlung eine Druckerhöhung zwischen 0,5 bar bis 5,0 bar, vorzugsweise zwischen 0,5 bar bis 3,0 bar erfolgt.

7. Verfahren nach einem der Ansprüche 2 - 5, **dadurch gekennzeichnet, dass** die Druckprüfung nach Beendigung der Füllphase erfolgt und/oder dass die Füllphase für die Druckprüfung unterbrochen und bei einem positiven Ergebnis der Druckprüfung nach dieser fortgesetzt wird.

8. Verfahren nach einem der vorhergehenden Ansprüche, **dadurch gekennzeichnet, dass** der Innenraum der Behälter (2) vor dem Einleiten der Füllphase mit einem Inertgas, beispielsweise CO2-Gas aus einem Spül- oder Vorspannkanal (19) gespült und/oder vorgespannt wird, und dass nach Beendigung der Druckbehandlung der Behälterinnenraum in den Spül- und/oder Vorspannkanal (19) entspannt wird.

9. Verfahren nach einem der vorhergehenden Ansprüche, **dadurch gekennzeichnet, dass** der Behandlungsdruck (PP) im Behälter (2) mit wenigstens einem elektrischen Drucksensor (21) überwacht wird, der beispielsweise in einem bei der Druckprüfung mit dem Behälterinnenraum in Verbindung stehenden Raum (16, 24) des Füllelementes (1, 1a) angeordnet ist.

10. Verfahren nach einem der vorhergehenden Ansprüche, **dadurch gekennzeichnet, dass** bei der Druckprüfung ein eventuelles Austreten von Füllgut aus dem jeweiligen Behälter (2) mit einem Kamerasystem (23) überwacht wird.

11. Verfahren nach einem der vorhergehenden Ansprüche, **dadurch gekennzeichnet, dass** als Behandlungsgas ein Inertgas, z.B. CO2-Gas, Stickstoff oder sterile Luft verwendet wird.

12. Füllsystem zum Füllen von Behältern (2), insbesondere zum Füllen von großvolumigen Behältern mit einem flüssigen Füllgut, mit wenigstens einem Füllelement (1, 1a) zur gesteuerten Abgabe des Füllgutes in den jeweiligen Behälter (2) in einer Füllphase, mit einer Quelle für ein Behandlungsgas sowie mit wenigstens einem in einem Gehäuse (6) des Füllelementes (1, 1a) ausgebildeten gesteuerten Gasweg (13, 14, 15), über den der Innenraum des in Dichtlage am Füllelement (1, 1a) angeordneten Behälters mit der Quelle für das Behandlungsgas in Form eines Druckgases verbindbar ist, wobei die Quelle (20) ein Inertgas unter Behandlungsdruck (PP) aufweist, **dadurch gekennzeichnet, dass** das Füllsystem derart ausgebildet ist, dass der jeweilige Behälter (2) zeit- und/oder druckgesteuert mit dem Behandlungs- oder Prüfdruck beaufschlagbar ist, und dann nach einem Trennen der Verbindung zwischen den Behälter (2) und der das Behandlungsgas oder Prüfgas unter Behandlungsdruck bereitstellenden Quelle der Druck im Behälter über eine Zeitdauer bzw. Prüfzeir überwacht wird.

13. Füllsystem nach Anspruch 12, **dadurch gekennzeichnet, dass** bei mehreren Füllelementen (1, 1a) die Quelle für das Behandlungsgas ein für die Füllelemente (1, 1a) oder eine Gruppe von mehreren Füllelementen gemeinsamer Kanal (20) ist.

14. Füllsystem nach Anspruch 12 oder 13, **dadurch gekennzeichnet, dass** im Füllelement (1, 1a) ein weiterer gesteuerter Gasweg (13, 14, 15) ausgebildet ist, über den der Innenraum des in Dichtlage am Füllelement (1, 1a) befindlichen Behälters (2) nach Beendigung der Druckbehandlung und/oder Druckprüfung mit einem Sammelraum, vorzugsweise mit einem zweiten für die Füllelemente (1, 1a) oder einer Gruppe von Füllelementen (1, 1a) gemeinsamen Kanal (19) zum Ableiten des Behandlungsgases verbindbar ist und aus welchem über die gesteuerten Gaswege (13, 14, 15) ein Spülen und/oder Vorspannen des Innenraums der Behälter (2) erfolgt.

## Claims

1. Method for filling containers (2), in particular large-volume containers, with a liquid carbonated filling material, wherein, for the pressure filling of the respective container (2), it is arranged in a sealing position at a filling element (1, 1a), by means of which, in a filling phase, the filling material flows under filling pressure into the interior of the container, which is prestressed with a prestressing gas up to a filling pressure (PF), wherein, after the ending of the filling phase, the container (2) is relieved in a relieving phase to ambient pressure, and wherein, following the filling phase and before the relieving phase, in each case in a pressure treatment phase the filling material in the containers (2) is subjected to a treatment pressure (PP) which is increased in relation to the filling pressure (PF), specifically by introducing a treatment gas into a head space, not occupied by filling material, of the respective container (2), which continues to be arranged in a sealing position at the filling element (1, 1a), wherein the pressure treatment phase involves a combined pressure treatment and pressure test, wherein this pressure test takes place in such a way that the respective container (2) is subjected to the treatment pressure or test pressure in a time-controlled and/or pressure-controlled manner, and then, after the separation of the connection between the container (2) and the source providing the treatment gas or test gas under treatment pressure, the pressure in the container (2) is then monitored over a period of time or a test period, wherein, if in this situation the pressure in the container (2) drops during the test period, the container is identified as leaking, and then, for example, is isolated and ejected.

2. Method for filling containers (2), in particular large-volume containers, with a liquid filling material, wherein the containers are filled with the liquid filling material in a filling phase, wherein the interior of the container (2) is subjected, during a pressure treatment phase configured as a pressure test, to a treatment pressure (PP) of a treatment gas, used as a test gas, from a source (20) providing this treatment gas, and, after separation of the connection between the container interior and the source (20), the time sequence of the pressure in the container interior is monitored over a test period (tP), wherein the pressure test is carried out with the container (2) at least partially filled with the filling material in the filling phase, wherein the pressure test takes place with the container (2) arranged in a sealing position against a filling element (1, 1a) of a filling system, and that the treatment pressure (PP) is greater than the filling pressure (PF) which is used for a pressure filling of the container (2).

3. Method according to any one of the preceding claims, **characterised in that** the pressure treatment and/or pressure test takes place by connecting the respective container interior to a channel (20) of the filling system, conveying the treatment gas under treatment pressure (PP).

4. Method according to any one of the preceding claims, **characterised in that** the pressure treatment and/or pressure test is shorter than the filling phase and/or amounts to 0.5 to 10 seconds, and preferably 0.5 to 3 seconds.

5. Method according to any one of the preceding claims, **characterised in that** the treatment pressure (PP) corresponds to 1.5 times to 2.5 times the filling pressure (PF) during the pressure filling, and preferably 2 times the filling pressure (PF) during the pressure filling.

6. Method according to any one of the preceding claims, **characterised in that**, during the pressure treatment, a pressure increase takes place of between 0.5 bar to 5.0 bar, preferably between 0.5 bar to 3.0 bar.

7. Method according to any one of claims 2-5, **characterised in that** the pressure test takes place after the ending of the filling phase, and/or that the filling phase is interrupted for the pressure test, and, in the event of a positive result of the pressure test, it continues thereafter.

8. Method according to any one of the preceding claims, **characterised in that** the interior of the containers (2) are flushed before the initiation of the filling phase with an inert gas, such as CO₂ gas, from a flushing channel or prestressing channel (19), and that, after the ending of the pressure treatment, the container interior is relieved into the flushing channel and/or prestressing channel (19).

9. Method according to any one of the preceding claims, **characterised in that** the treatment pressure (PP) in the container (2) is monitored by at least one electrical pressure sensor (21), which is arranged, for example, in a space (16, 24) of the filling element (1, 1a), which during the pressure test is in connection with the container interior.

10. Method according to any one of the preceding claims, **characterised in that**, during the pressure test, a possible emergence of filling material from the respective container (2) is monitored by a camera system (23).

11. Method according to any one of the preceding claims, **characterised in that** use is made, as treatment gas, of an inert gas, such as CO₂ gas, nitrogen, or sterile air.

12. Filling system for filling containers (2), in particular for filling large-volume containers with a liquid filling material, with at least one filling element (1, 1a) for the controlled delivery of the filling material into the respective container (2) in a filling phase, with a source for a treatment gas, and with at least controlled one gas path (13, 14, 15) formed in a housing (6) of the filling element (1, 1a), by means of which the interior of the container, arranged in a sealing position at the filling element (1, 1a), can be connected to the source for the treatment gas in the form of a pressure gas, wherein the source (20) comprises an inert gas under treatment pressure (PP), **characterised in that** the filling system is configured in such a way that the respective container (2) can be subjected, in a time-controlled and/or pressure-controlled manner, to the treatment pressure or test pressure, and then, after the separation of the connection between the container (2) and the source providing the treatment gas or test gas under treatment pressure, the pressure in the container is monitored over a period of time or test time.

13. Filling system according to claim 12, **characterised in that**, with several filling elements (1, 1a), the source for the treatment gas is a channel (20) which is common to the filling elements (1, 1a) or a group of several filling elements.

14. Filling system according to claim 12 or 13, **characterised in that** a further controlled gas path (13, 14, 15) is formed in the filling element (1, 1a), by means of which the interior of the container (2), located in the sealing position at the filling element (1, 1a), after the ending of the pressure treatment and/or pressure test, can be connected to a collective space, preferably to a second channel (19), common to the filling elements (1, 1a) or a group of filling elements (1, 1a), for discharging the treatment gas, and by which, by means of the controlled gas path (13, 14, 15), flushing and/or prestressing of the interior of the containers (2) takes place.

## Revendications

1. Procédé de remplissage de contenants (2), en particulier de contenants à grand volume, avec un produit de remplissage carbonisé liquide, dans lequel pour remplir sous pression le contenant (2) correspondant, celui-ci est disposé de manière étanche sur un élément de remplissage (1, 1a), par l'intermédiaire duquel le produit de remplissage afflue sous pression de remplissage dans l'espace intérieur de contenant précontraint avec un gaz de précontrainte à une pression de remplissage (PF) lors d'une phase de remplissage, la détente du contenant (2) à une pression ambiante ayant lieu après la fin de la phase de remplissage lors d'une phase de détente, le produit de remplissage dans les contenants (2) étant soumis à l'action d'une pression de traitement (PP) augmentée par rapport à la pression de remplissage (PF) après la phase de remplissage et avant la phase de détente lors de respectivement une phrase de traitement sous pression, à savoir par l'introduction d'un gaz de traitement dans un espace de tête, non adopté par le produit de remplissage, du contenant (2) respectif disposé par ailleurs en position étanche sur l'élément de remplissage (1, 1a),
la phase de traitement sous pression consistant en un traitement sous pression combiné et un contrôle de pression, ledit contrôle de pression étant effectué de telle sorte que le contenant (2) respectif est soumis de manière commandée dans le temps et/ou avec une commande de pression, à l'action de la pression de traitement ou de contrôle puis après la déconnexion entre le contenant (2) et la source fournissant le gaz de traitement ou le gaz de contrôle sous pression de traitement, la pression dans le contenant (2) étant surveillée pendant une durée ou un temps de contrôle, lorsqu'en l'occurrence la pression dans le contenant (2) baisse pendant le temps de contrôle, le contenant est identifié comme étant non étanche et est par exemple évacué.

2. Procédé de remplissage de contenants (2), en particulier de contenants à grand volume, avec un produit de remplissage liquide, les contenants étant remplis lors d'une phase de remplissage avec le produit de remplissage liquide, l'espace intérieur de contenant des contenants (2) étant soumis pendant une phase de traitement sous pression réalisée en tant que contrôle de pression à l'action d'une pression de traitement (PP) d'un gaz de traitement utilisé en tant que gaz de contrôle, provenant d'une source (20) fournissant ledit gaz de traitement et l'évolution dans le temps de la pression dans l'espace intérieur de contenant est surveillée pendant un temps de contrôle (tP) après une déconnexion entre l'espace intérieur de contenant et la source (20),
le contrôle de pression étant effectué pour un contenant (2) au moins partiellement rempli avec le produit de remplissage lors de la phase de remplissage, le contrôle de pression étant effectué pour un contenant (2) disposé en position étanche contre un élément de remplissage (1, 1a) d'un système de remplissage et que la pression de traitement (PP) est supérieure à la pression de remplissage (PF), qui est utilisée lors d'un remplissage sous pression des contenants (2).

3. Procédé selon l'une quelconque des revendications précédentes, **caractérisé en ce que** le traitement sous pression et/ou le contrôle de pression sont effectués en connectant l'espace intérieur de contenant respectif à un canal (20) du système de remplissage guidant le gaz de traitement sous une pression de traitement (PP).

4. Procédé selon l'une quelconque des revendications précédentes, **caractérisé en ce que** la durée de la phase de traitement sous pression est plus courte que la phase de remplissage et/ou va de 0,5 à 10 secondes, de préférence de 0,5 à 3,0 secondes.

5. Procédé selon l'une quelconque des revendications précédentes, **caractérisé en ce que** la pression de traitement (PP) correspond à 1,5 fois à 2,5 fois la pression de remplissage (PF), lors du remplissage sous pression, préférentiellement à 2 fois la pression de remplissage (PF) lors du remplissage sous pression.

6. Procédé selon l'une quelconque des revendications précédentes, **caractérisé en ce que** lors du traitement sous pression, une augmentation de pression entre 0,5 bar et 5,0 bar, de préférence entre 0,5 bar et 3,0 bar, est effectuée.

7. Procédé selon l'une quelconque des revendications 2 ― 5, **caractérisé en ce que** le contrôle de pression est effectué après la fin de la phase de remplissage, et/ou que la phase de remplissage est interrompue pour le contrôle de pression et se poursuit dans le cas d'un résultat positif du contrôle de pression après celui-ci.

8. Procédé selon l'une quelconque des revendications précédentes, **caractérisé en ce que** l'espace intérieur des contenants (2) est rincé et/ou précontraint avant le lancement de la phase de remplissage avec un gaz inerte, par exemple du gaz CO2 provenant d'un canal de rinçage ou de précontrainte (19), et que l'espace intérieur de contenant est détendu dans le canal de rinçage et/ou de précontrainte (19) à la fin du traitement sous pression.

9. Procédé selon l'une quelconque des revendications précédentes, **caractérisé en ce que** la pression de traitement (PP) dans le contenant (2) est surveillée avec au moins un capteur de pression électrique (21), qui est disposé par exemple dans un espace (16, 24), relié à l'espace intérieur de contentant lors du contrôle de pression, de l'élément de remplissage (1, 1a).

10. Procédé selon l'une quelconque des revendications précédentes, **caractérisé en ce que** lors du contrôle de pression, une sortie éventuelle de produit de remplissage hors du contenant (2) respectif est surveillée avec un système de caméra (23).

11. Procédé selon l'une quelconque des revendications précédentes, **caractérisé en ce qu'**un gaz inerte, par exemple du gaz de CO2, de l'azote ou de l'air stérile, est utilisé en tant que gaz de traitement.

12. Système de remplissage pour remplir des contenants (2), en particulier de remplissage de contenants à grand volume avec un produit de remplissage liquide, avec au moins un élément de remplissage (1, 1a) pour distribuer de manière commandée le produit de remplissage dans le contenant (2) respectif lors d'une phase de remplissage, avec une source pour un gaz de traitement ainsi qu'avec au moins une voie de gaz (13, 14, 15) commandée réalisée dans un boîtier (6) de l'élément de remplissage (1, 1a), par l'intermédiaire de laquelle l'espace intérieur du contenant disposé en position étanche sur l'élément de remplissage (1, 1a) peut être connecté à la source pour le gaz de traitement sous la forme d'un gaz sous pression,
la source (20) présentant un gaz inerte sous pression de traitement (PP),
**caractérisé en ce que** le système de remplissage est réalisé de telle manière que le contenant (2) respectif peut être soumis à l'action de la pression de traitement ou de contrôle de manière commandée dans le temps et/ou avec une commande de pression puis la pression dans le contenant est surveillée pendant une durée de temps ou un temps de contrôle après une déconnexion entre le contenant (2) et la source fournissant le gaz de traitement ou le gaz de contrôle sous pression de traitement.

13. Système de remplissage selon la revendication 12, **caractérisé en ce que** dans le cas de plusieurs éléments de remplissage (1, 1a), la source pour le gaz de traitement est un canal (20) commun aux éléments de remplissage (1, 1a) ou à un groupe de plusieurs éléments de remplissage.

14. Système de remplissage selon la revendication 12 ou 13, **caractérisé en ce qu'**est réalisée dans l'élément de remplissage (1, 1a) une autre voie de gaz (13, 14, 15) commandée, par l'intermédiaire de laquelle l'espace intérieur du contenant (2) se trouvant en position étanche sur l'élément de remplissage (1, 1a) peut être connecté après la fin du traitement sous pression et/ou du contrôle de pression à un espace de collecte, de préférence à un deuxième canal (19) commun aux éléments de remplissage (1, 1a) ou à un groupe d'éléments de remplissage (1, 1a) pour évacuer le gaz de traitement et à partir de laquelle un rinçage et/ou une précontrainte de l'espace intérieur des contenants (2) sont effectués par l'intermédiaire des voies de gaz (13, 14, 15) commandées.
